# EUROPEAN PATENT SPECIFICATION

(11) **EP 3 321 644 B1**
(45) Date of publication and mention of the grant of the patent: **23.02.2022**
(21) Application number: 16198402.6
(22) Date of filing: 11.11.2016
(51) Int. Cl.: G01F 1/66, G01M 3/00, G01F 15/00

(54) **FLUID SUPPLY LINE COMPRISING A FLUID FLOW MONITORING UNIT**
FLUIDVERSORGUNGSLEITUNG MIT EINER FLUIDDURCHFLUSSÜBERWACHUNGSEINHEIT
CONDUITE D'ALIMENTATION EN FLUIDE COMPRENANT UNE UNITÉ DE SURVEILLANCE D'ÉCOULEMENT DE FLUIDE

(43) Date of publication of application: 16.05.2018
(73) Proprietor: KAMSTRUP A/S, 8660 Skanderborg (DK)
(72) Inventor: Savolainen, Juha-Matti, 8541 Skødstrup (DK); Laursen, Peter Schmidt, 8660 Skanderborg (DK); Skallebæk, Anders, 8660 Skanderborg (DK)
(74) Representative: Plougmann Vingtoft a/s

(56) References cited:
- WO-A1-2016/025919
- JP-A- S59 176 643
- CARL CARLANDER ET AL: "Installation effects on an ultrasonic flow meter with implications for self diagnostics", FLOW MEASUREMENT AND INSTRUMENTATION., vol. 11, no. 2, 1 June 2000 (2000-06-01), pages 109-122, XP055351991, GB ISSN: 0955-5986, DOI: 10.1016/S0955-5986(00)00005-4

## Description

### FIELD OF THE INVENTION

The present invention relates to a fluid supply line comprising a fluid flow monitoring unit for monitoring a fluid flowing through a check-valve. In particular, the invention relates to a fluid supply line comprising a fluid flow monitoring unit for determining the functional state of a check-valve arranged inside or in continuation of the fluid flow monitoring unit. The invention further relates to a method for detecting leaking check-valves in a utility supply network based on ultrasonic time-of-flight measurements.

### BACKGROUND OF THE INVENTION

Consumption meters based on ultrasonic time-of-flight measurements are widely accepted as a superior technology for measuring the consumption of a utility, such as potable water or water born heating or cooling. Compared to mechanical meters using rotating impellers for metering the flow of a fluid, ultrasonic flowmeters provide a number of advantages such as improved robustness due to no moving parts, higher accuracy and the ability to measure flow at lower flowrates.

In an ultrasonic flowmeter the flowrate is determined by clocking the difference in transit times of counter- and co propagating ultrasonic signals transmitted through the flowing medium. The transit time being the time an ultrasonic wave packet takes to traverse the fluid from a transmitting transducer to a receiving transducer. A measure for the transit time difference is the phase difference, Δφ between two signals or oscillations making up the wave packets. In principle, during no flow conditions the phase difference is 0, during flow in a forward direction the phase difference is positive and during reverse flow the phase difference is negative. Further, the higher the flow rate the greater the phase difference.

Utility supply networks are comprised by a multitude of different components and equipment to ensure a stable and safe supply of the utility. Preventing contamination of the supply network is a primary concern, especially within potable water supply networks. One important measure for preventing contamination is to ensure that water does not flow backwards from the point of consumption, being for example a household network, and into the utility network. Once the supplied water has left the utility network, i.e. has past the legacy flowmeter, and entered the household network, the utility company is no longer able to control and prevent sources of contamination. Sources of contamination may be defect pipes, heat exchanger or the like being part of the household network. To prevent such backflow of water it is common practice in many utility supply networks, to install check-valves or non-return valves at the border between the utility network and the local household network. In practice, such check-valves are often installed in connection with or integrated in the legacy flowmeter arranged for measuring the supplied amount of water.

However, check-valves installed to prevent backflow will only provide the intended functionality as long as they are operative and functions correctly. Therefor a need exists for periodically controlling the functional state of such check-valve. Historically, the control of check-valves has been done manually by inspecting the installation and tapping of water from a test cock or the like. As check-valves are located at every point of consumption and often inside private homes, the task of controlling check-valves is cumbersome, extremely time consuming and expensive. Relying on the utility consumer for testing in also far from optimal.

Document WO 2016/025919 A1 specifies a fluid supply line comprising a fluid flow monitoring unit and a check valve, the fluid flow monitoring unit being adapted for monitoring a fluid flowing through the check valve. The document further specifies a method for detecting leaking check-valves in a utility supply network by a fluid flow monitoring unit.

Consequently a need exists for a solution for remotely controlling the functional state of check-valves. More specifically an improved fluid flow monitoring unit or flowmeter would be advantageous, and in particular a fluid flow monitoring unit able to detect the functional state of a control valveand possible prevent water or another utility from flowing back into the utility supply network.

### OBJECT OF THE INVENTION

An object of the present invention is to provide a fluid supply line comprising a check-valve and a fluid flow monitoring unit configured to monitor a water supply network, such as a utility network for suppling potable water or water born district heating or cooling. In particular, it may be seen as a further object to provide a fluid flow monitoring unit that is able to detect defect equipment or components in a water supply network, such as a defect check-valve.

### SUMMARY OF THE INVENTION

The above described object is intended to be obtained in a first aspect of the invention by providing, according to appended independent claim 1, a fluid supply line comprising a check-valve and a fluid flow monitoring unit for monitoring a fluid flowing through a check-valve, the fluid flow monitoring unit comprising: a flow tube with a through-going opening for passage of a fluid between an inlet and an outlet; two or more ultrasonic transducers arranged at the flow tube for transmitting and receiving co- and counter propagating ultrasonic wave packets through the fluid; and a control circuit configured for operating the ultrasonic transducers and calculating transit time differences between the co- and counter propagating wave packets; characterized in that the control circuit is further configured to compute a measure of statistical dispersion of a plurality of continuously measured transit time differences; and detecting whether a check-valve arranged in or in continuation of the flow tube is leaking by determining whether the measure of statistical dispersion is above a dispersion-threshold during a period subject to no-flow conditions, a no-flow condition is said to exist when the fluid flow monitoring unit determines the flow to be zero when no fluid is consumed at a point of consumption of the supply line.

Hereby the fluid flow monitoring unit may be used to monitor the functional state of a check-valve mounted inside the flow tube or in continuation of the fluid flow monitoring unit. Being able to detect the functional state of a check-valve and for example determine whether the check-valve is leaking, based on statistical analysis of ultrasonic time-of-flight measurements alone, is a significant improvement over present manual inspection schemes.

Throughout the application, the terms transit time difference and phase difference are used interchangeably and some also together. The phase difference is just one way of determining transit time differences of co- and counter propagating ultrasonic wave packets. Other measures for and ways of determining the transit time difference, such as pulse, amplitude or pulse form, may thus also be applied within the scope of the invention.

The invention further relates, according to appended independent claim 10, to a method for detecting leaking check-valves in a utility supply network based on statistical analysis of ultrasonic time-of-flight measurements.

These and other aspects of the invention, according to the appended dependent claims, will be apparent from and elucidated with reference to the embodiments described hereinafter.

### BRIEF DESCRIPTION OF THE FIGURES

The fluid supply line and method according to the invention will now be described in more detail with regard to the accompanying figures. The figures show one way of implementing the present invention and is not to be construed as being limiting to other possible embodiments falling within the scope of the attached claim set.
Figure 1 shows a fluid flow monitoring unit in the form of a water meter,
Figure 2 shows schematic diagram of a water meter installation,
Figure 3 shows a fluid flow monitoring unit comprising and a check-valve,
Figure 4 shows the water meter of Fig. 3 with the check-valve mounted inside the flow tube,
Figure 5a shows a graph illustrating flow measurements for associated with a properly functional check-valve and
Figure 5b shows a graph illustrating flow measurements associated with a leaking check-valve.

### DETAILED DESCRIPTION OF AN EMBODIMENT

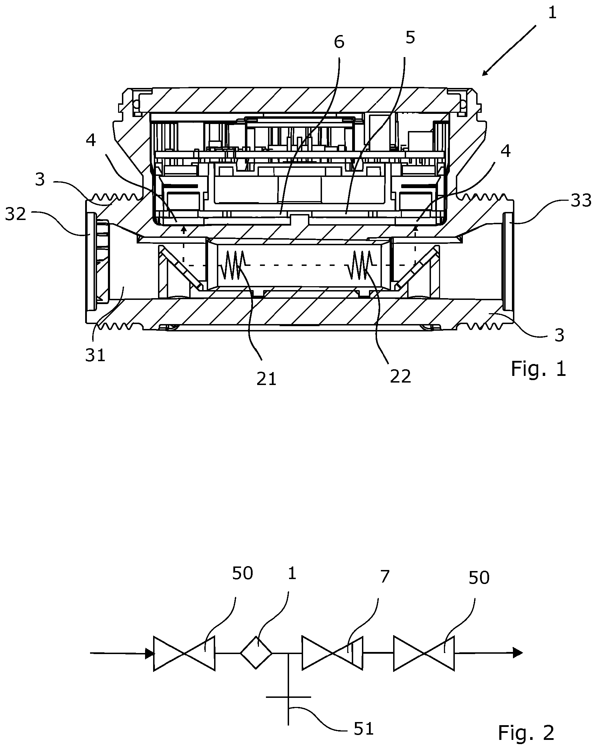

Referring to Fig. 1 a fluid flow monitoring unit 1 is shown. The fluid flow monitoring unit comprises a flow tube 3 with a through-going opening 31 for passage of the fluid between an inlet 32 and an outlet 33. Two ultrasonic transducers 4, in the form of piezoelectric transducers, are arranged at the flow tube 3 for transmitting and receiving ultrasonic wave packets 21, 22 through a fluid present inside the tube. The ultrasonic transducers are mounted on a printed circuit board 6 and operated by a control circuit 5. The control circuit may be implemented using discrete components, as an integrated circuit or an ASIC or in any other way known to the skilled person. Further, the control circuit is configured to operating the ultrasonic transducers to transmit and receive co-propagating wave packets 21 and counter-propagating ultrasonic wave packets 22. The control circuit is also configured to determine transit times between transmission and reception of the ultrasonic wave packets, and transit time differences between co- and counter propagating wave packets. Here the transit time is considered the time an ultrasonic wave front takes to traverse the fluid from the transmitting transducer to the receiving transducer. Considering two ultrasonic wave packets propagating in opposite direction with respect to the mean flow direction of the running fluid, the transit time difference may be described by the phase difference, Δφ, between the two oscillations making up the wave packets. The phase difference, Δφ may thus be used as a measure for the transit time difference of two ultrasonic wave packets propagating in opposite direction.

Fig. 2 shows a schematic drawing of an exemplary installation of a fluid flow monitoring unit 1. The fluid flow monitoring unit is mounted on the supply line together with a test cock 51 and a check-valve 7. On both sides of the installation shut-off valves 50 are installed. The check-valve is thus installed in direct continuation of the flow tube of the fluid flow monitoring unit. As envisaged by the skilled person, the fluid flow monitoring unit may be installed in a number of other ways, such as without a test cock and shut-off valves, without departing from the scope of the invention.

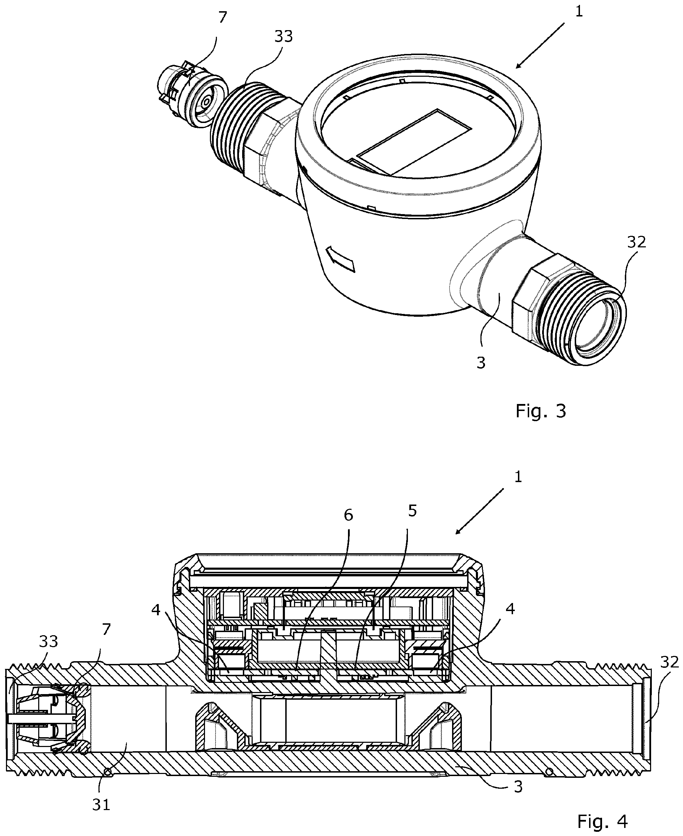

Fig. 3 shows another fluid flow monitoring unit provided with an integrated check-valve 7. As shown in Fig. 4, the check-vale is mounted inside the flow tube 3, thereby controlling the flow of fluid running through the through-going opening 31.

As described above, the fluid flow monitoring unit continuously determines the flowrate of fluid flowing through the flow tube based on the transit time or phase difference between co- and counter propagating wave packets. In the case of water consumption at a point of consumption, the flowrate registered by the fluid flow monitoring unit is usually in the range of many litres (l) per hour. Thus, when a fluid is flowing the fluid flow monitoring unit thus determines the flow to be more than 0 (zero). On the other hand, when no water is flowing, such as when no water is consumed at the point of consumption, the fluid flow monitoring unit determines the flow to be 0 (zero) and a no-flow condition is said to exist.

The present invention is based on the first insight by the inventors that even during no-flow conditions, i.e. when the there is no actual flow through the flow tube of the fluid flow monitoring unit, the phase difference determined control circuit may be different from 0 (zero). Further, it has been found that such positive or negative phase difference detected during no-flow conditions may be caused by various external effects influencing the co- and counter propagating ultrasonic signals.

Firstly, water is in theory incompressible and thus water should not be able to flow into a household network or the like without water at the same time leaving the household network. However, as supplied potable water is often a mixture of water and air, the supplied fluid is somewhat compressible. Further, household network components such as plastic pipes and heating and cooling-down of the fluid contribute to a certain variation in the total volume of the system. In practice, this results in the possibility of very low volume flows during no-flow conditions and consequently in certain phase difference between co- and counter propagating ultrasonic signal.

Secondly, pressure transients or pressure waves traveling through the utility network and local network, also sometimes referred to as water hammer, may also cause the detection of a phase difference during no-flow conditions. The pressure transients may be caused by valves being rapidly closed or other sudden changes in flowrate or pressure throughout the network. The forces influencing the network as a result of such pressure transients can be significant and the pressure transients may also cause local flows of fluid in a network. Such local flows are characterised by high flowrate over short distances and for very short periods of time. A legacy meter or water meter for measuring the consumption of water usually does not measure or count such local flows because they are only monetarily.

A second insight by the inventors leading to the present invention is the finding that the operational state of a check-valve, mounted inside or in continuation of the flow tube of a fluid flow monitoring unit, influences the impact the aforementioned external effects have on the phase difference detected during no-flow conditions. More specifically the inventors have discovered that for a leaking check-vale, the transit time difference or phase differences detected during a period subject to no-flow conditions, are more disperse than would have been the case for a non-leaking check-valve. The variance of continuously measured transit time or phase differences is thus higher for a leaking check-valve.

A properly working check-valve opens when water flows from the utility network and into the local network and closes when the flow ceases or water flows in the opposite direction. A defect check-valve on the other hand may not close properly or closes in a delayed manner. Therefore, for at properly working check-valve, the external effects described above have a reduced impact on the phase differences detected in during no-flow conditions compared to leaking check-valve. In other words, when the check-valve is leaking the external effects have a greater impact on the detected transit time or phase differences.

Utilizing the above described insights, the control circuit 5 of the fluid flow monitoring unit is configured to continuously determine a measure of statistical dispersion (in the following denoted a dispersion measure) of a data set comprising a plurality of phase differences measured during a measurement period subject to no-flow conditions. The dispersion measure may for example be the variance (σ²) or the standard deviation (σ) but is not limited hereto.

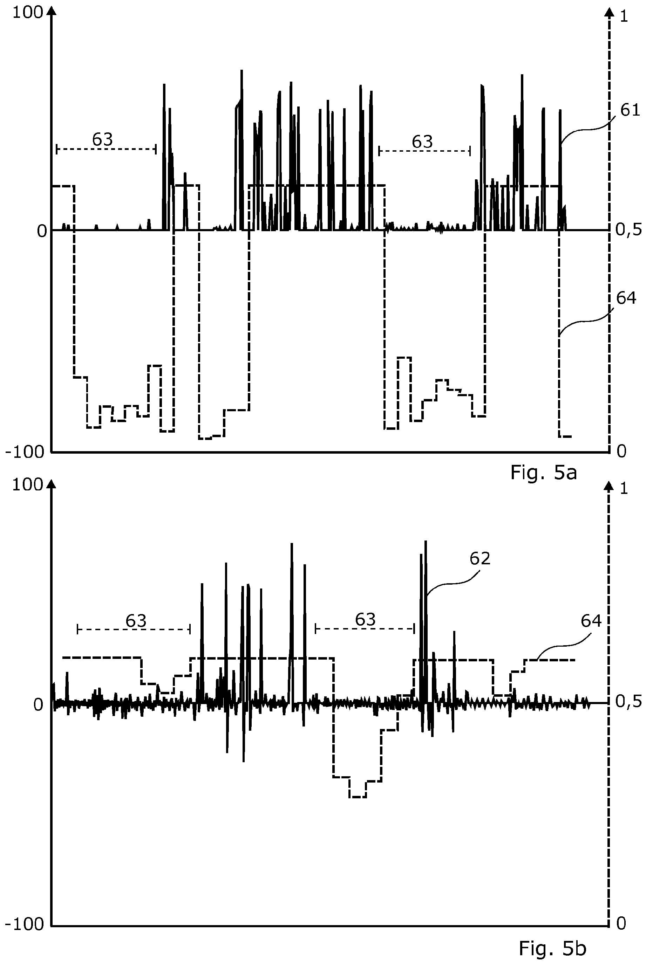

Referring to Fig. 5a and 5b, the phase differences determined by the control circuit are shown. The graph 61 shown in Fig. 5a illustrates the phase differences determined by a fluid flow monitoring unit, monitoring a fluid flowing through a properly functioning check-valve and the graph 62 shown in Fig. 5b illustrates the phase differences determined by a fluid flow monitoring unit, monitoring a fluid flowing through a leaking check-valve. Each graph shows phase differences determined over a 24 hours period. The phase difference is proportional to the flowrate and larger peaks indicate that a fluid flows through the fluid flow monitoring unit. As seen from the graphs, the larger peaks are in the range from 50-80 degrees, but fluid flow may also be indicated by lower phase differences.

Minor variations on the other hand, as illustrated by the graphs more of less constant deviation from 0, are caused by the aforementioned external effects and thus does not indicate and actual fluid flow. Thus, from the graphs several periods 63 subject to no-flow conditions can be identified during the 24-hours period covered.

The second graph 64 shown in each of the figures 5a and 5b illustrates the dispersion measure, in the given example the standard deviation, computed by the control circuiting based on the continuously measured phase differences. As seen from the figures, the dispersion measures computed by a fluid flow monitoring unit coupled to the leaking check-valve is generally higher than the dispersion measure related to the properly working check-valve. Focusing on the no-flow periods 63 this becomes even more significant. In the figures the shown dispersion measure is within the range from 0 - 1, however this may vary depending on the exact type of dispersion measure and the measured used for the determined transit time differences.

Consequently, by determining whether the dispersion measure is above a threshold during no-flow periods, it is possible to determine if the check-valve associated with the fluid flow monitoring unit is leaking. In one exemplary embodiment using the standard deviation as the dispersion measure, the threshold for determining whether the check-valve is leaking may be from 0,2-0,5 degrees when the phase difference is used as a measure for transit time difference. Alternatively, the dispersion-threshold may be 1 (one) standard deviation calculated based on a population of historic transit time differences measured during a previous period subject to no-flow conditions.

The control circuit may be configured to determine the phase difference every 4 seconds based on co- and counter propagating wave packets transmitted. Alternatively, the phase difference may be determined with both a higher or lower frequencies, such as every 2 seconds or every 8 seconds. When a certain measurement period have lapsed, the dispersion measure is computed based on all phase differences determined during that measurement period under the condition that all phase differences have been determined during no-flow conditions. The measurement period may be of a duration of approximately 1 hour, but shorter periods, such as 32 seconds, or longer periods such as 24 hours may also be applied.

Various algorithms known to the skilled person may be used to calculate the dispersion measure. In the case of variance or standard deviation, the algorithm developed by B. P. Welford (also known as the Welford method) may be used for calculating the dispersion measure. An advantage of this algorithm is that the variance or standard deviation can be calculated without buffering all phase differences of the measurement period in a memory of the fluid flow monitoring unit. Instead the phase differences or other measure for the transit time difference is continuously included in the calculation by the algorithm and the actual variance is calculated at the end of the measurement period.

I addition to the dispersion measure other statistical parameters, such as the mean, may also be calculated for the phase differences or transit time differences determined during each measurement period.

The control circuit may also be configured to determine the dispersion measure for every measurement period irrespectively of whether the phase differences have been determined during no-flow conditions. In this case, the mean phase difference for each measurement period is also calculated and used together with the dispersion measure to determine whether an associated check-valve is leaking. The mean phase difference from a number of measurement periods, such as 24 periods covering a 24 hours cycle, are compared and only the dispersion measure for the measurement period having the lowest mean phase difference is considered when determining the functional state of the check-vale. Alternatively, only dispersion measure for the measurement periods having a mean phase difference below a certain threshold may be considered when determining the functional state of the check-vale.

Additionally, the control circuit may be configured to determine the dispersion measure for every measurement period irrespectively of whether the phase differences have been determined during no-flow conditions, but then only the smallest dispersion measure considered when determining the functional state of the check-vale.

When the control circuit have determined a dispersion measure and the mean of the phase differences for a given measurement period, the respective values are saved in a memory of the fluid flow monitoring unit. Depending on the configuration, the most resent determined dispersion measure may be compared to the previously determined dispersion measure. The most recent dispersion measure may then only be stored in the memory together with the mean of the phase differences, if the most resent dispersion measure is greater than the previous determined dispersion measure.

The fluid flow monitoring units described above may also be configured to operate as flowmeters or water meters adapted to determining the aggregated consumption of water or other fluid running through the flow tube. Such flowmeters may also be determined smart meters, legacy meters or consumption meters.

Analysis of the dispersion measures, the mean phase difference and possible other statistical parameters to determine the functional state of a check-valve may be performed by the fluid flow monitoring unit itself or on a higher system-level. In case of the analysis being performed by the fluid flow monitoring unit, the dispersion measure determined is continuously compared to a threshold-value store in the memory of the fluid flow monitoring unit. If the determined dispersion measure is above the threshold-value an alarm is activated by the fluid flow monitoring unit. Such alarm may be indicated in a display of the fluid flow monitoring unit and/or information about the alarm may be included in radio packets transmitted from the fluid flow monitoring unit to a server or other device. The server may be part of a utility backend system for controlling and monitoring a plurality of fluid flow monitoring units. For transmitting radio packets, the fluid flow monitoring unit is provided with a radio-frequency transmitter for wirelessly transmitting radio packets via a wireless network.

In case the analysis of the dispersion measures and the mean phase difference is to be done on a system-level, values related to the dispersion measure and the mean are included in one or more radio packets and transmitted via the transmitter of the fluid flow monitoring unit to a system server. The transmission may be via a fixed network, also referred to as an AMI-network of via a drive-by system, also sometimes referred to as an AMR-system. In either case the dispersion measures and the mean phase difference are collected and analysed to determine the functional state of the check-valve. Analysis of the dispersion measure and mean may include historic data from the same fluid flow monitoring unit and data from other fluid flow measuring units. By including historic data into the analysis and tracking the development in the dispersion measure, tendencies may be identified.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A fluid supply line comprising a fluid flow monitoring unit and a check valve, the fluid flow monitoring unit being adapted for monitoring a fluid flowing through the check-valve, the fluid flow monitoring unit comprising:
- a flow tube (3) with a through-going opening (31) for passage of a fluid between an inlet (32) and an outlet (33);
- two or more ultrasonic transducers (4) arranged at the flow tube for transmitting and receiving co- and counter propagating ultrasonic wave packets (21, 22) through the fluid; and
- a control circuit (5) configured for operating the ultrasonic transducers and calculating transit time differences between the co- and counter propagating wave packets;
**characterized in that** the control circuit (5) is further configured to compute a measure (64) of statistical dispersion of a plurality of continuously measured transit time differences; and detecting whether the check-valve (7) arranged in or in continuation of the flow tube is leaking by determining whether the measure (64) of statistical dispersion is above a dispersion-threshold during a period (63) subject to no-flow conditions, a no-flow condition is said to exist when the fluid flow monitoring unit determines the flow to be zero when no fluid is consumed at a point of consumption of the supply line.

2. A fluid supply line according to claim 1, wherein the measure of statistical dispersion is the variance (σ²) or the standard deviation (σ) of the plurality of continuously measured transit time differences.

3. A fluid supply line according to any of the preceding claims, wherein the dispersion-threshold is 1 (one) standard deviation calculated based on a population of historic transit time differences measured during a previous period subject to no-flow conditions.

4. A fluid supply line according to any of the preceding claims, wherein the check-valve (7) is arranged in continuation of the flow tube or mounted in the through-going opening of the flow tube to control the flow of water through the flow tube.

5. A fluid supply line according to any of the preceding claims, further comprising a radio-frequency transmitter adapted to wirelessly transmit radio packets, and wherein the control circuit is adapted to include a value related to the measure of statistical dispersion in a radio packet and transmit the radio packet via the radio-frequency transmitter to a remote receiver.

6. A fluid supply line according to any of the preceding claims, wherein the control circuit is configured to activate an alarm If the determined dispersion measure is above the threshold-value, and to show an indication of the alarm in a display of the fluid flow monitoring unit.

7. A fluid supply line according to any of the preceding claims, wherein the fluid flow monitoring unit is a water meter configured to continuously determine the flowrate of the fluid passing between the inlet and the outlet of the flow tube.

8. A fluid supply line according to any of the preceding claims, wherein a phase difference (Δφ) between two oscillations representative of a co- and a counter propagating wave packet are used as a measure for the transit time difference and the measure of statistical dispersion is computed based on the phase difference.

9. A fluid supply line according to any of the preceding claims, wherein the control circuit is further adapted to calculate the aggregated flow of a fluid running through the flow tube and to store the aggregated flow in a memory of the fluid flow monitoring unit.

10. A method for detecting leaking check-valves in a utility supply network by a fluid flow monitoring unit based on ultrasonic time-of-flight measurements, the method comprising the steps of:
- continuously transmitting and receiving co- and counter propagating ultrasonic wave packets (20, 21) through a fluid by the fluid flow monitoring unit;
- continuously determining a transit time difference between the co- and a counter propagating ultrasonic wave packets by the fluid flow monitoring unit;
**characterized in that** the method comprises the steps of continuously computing by the fluid flow monitoring a measure (64) of statistical dispersion of a plurality of continuously measured transit time differences; and detecting whether the check-valve (7) is leaking by determining whether the measure (64) of statistical dispersion is above a dispersion-threshold during a period (63) subject to no-flow conditions, a no-flow condition is said to exist when the fluid flow monitoring unit determines the flow to be_zero when no fluid is consumed at a point of consumption of the supply line.

11. A method according to claim 10, wherein the measure of statistical dispersion computed by one fluid flow monitoring unit is additionally compared to the measures of statistical dispersion computed by one or more other by fluid flow monitoring units, to determine whether the check-valve is leaking.

12. A method according to claim 10, wherein the determination of whether the measure of statistical dispersion is above a dispersion-threshold during a period subject to no-flow conditions, is performed by the fluid flow monitoring unit.

## Patentansprüche

1. Fluidversorgungsleitung umfassend eine Fluiddurchflussüberwachungseinheit und ein Rückschlagventil, wobei die Fluiddurchflussüberwachungseinheit zum Überwachen eines Fluids, das durch das Rückschlagventil fließt, angepasst ist, wobei die Fluiddurchflussüberwachungseinheit Folgendes umfasst:
- ein Durchflussrohr (3) mit einer durchgehenden Öffnung (31) für einen Durchlass eines Fluids zwischen einem Einlass (32) und einem Auslass (33);
- zwei oder mehr Ultraschallwandler (4), die an dem Durchflussrohr angeordnet sind, zum Senden und Empfangen von sich mit und sich entgegengesetzt ausbreitenden Ultraschallwellenpaketen (21, 22) durch das Fluid; und
- eine Steuerschaltung (5), die zum Betreiben der Ultraschallwandler und zum Berechnen der Durchgangszeitunterschiede zwischen den sich mit und sich entgegengesetzt ausbreitenden Wellenpaketen konfiguriert ist;
**dadurch gekennzeichnet, dass** die Steuerschaltung (5) ferner dazu konfiguriert ist, ein Maß (64) von statistischer Dispersion einer Vielzahl von dauerhaft gemessenen Durchgangszeitunterschieden zu berechnen; und zu erkennen, ob das Rückschlagventil (7), das in dem Durchflussrohr oder als Weiterführung des Durchflussrohres angeordnet ist, leckt, indem bestimmt wird, ob das Maß (64) von statistischer Dispersion während eines Zeitraums (63), in dem Nichtdurchflussbedingungen vorliegen, über einem Dispersionsschwellenwert liegt, wobei eine Nichtdurchflussbedingung dann vorliegt, wenn die Fluiddurchflussüberwachungseinheit den Durchfluss als null bestimmt, wenn kein Fluid an einem Verbrauchspunkt der Versorgungsleitung verbraucht wird.

2. Fluidversorgungsleitung nach Anspruch 1, wobei das Maß von statistischer Dispersion die Varianz (σ²) oder die Standardabweichung (σ) der Vielzahl von dauerhaft gemessenen Durchgangszeitunterschieden ist.

3. Fluidversorgungsleitung nach einem der vorhergehenden Ansprüche, wobei der Dispersionsschwellenwert 1 (eine) Standardabweichung ist, die auf Grundlage einer Population von historischen Durchgangszeitunterschieden berechnet wird, die während eines vorhergehenden Zeitraums, in dem Nichtdurchflussbedingungen angelegen haben, gemessen wurden.

4. Fluidversorgungsleitung nach einem der vorhergehenden Ansprüche, wobei das Rückschlagventil (7) als Weiterführung des Durchflussrohres angeordnet ist oder in der durchgehenden Öffnung des Durchflussrohres montiert ist, um den Durchfluss von Wasser durch das Durchflussrohr zu steuern.

5. Fluidversorgungsleitung nach einem der vorhergehenden Ansprüche, ferner umfassend einen Funkfrequenzsender, der dazu angepasst ist, Funkpakete drahtlos zu senden, und wobei die Steuerschaltung dazu angepasst ist, einen Wert, der mit dem Maß von statistischer Dispersion verbunden ist, in einem Funkpaket zu enthalten und das Funkpaket über den Funkfrequenzsender an einen entfernen Empfänger zu senden.

6. Fluidversorgungsleitung nach einem der vorhergehenden Ansprüche, wobei die Steuerschaltung dazu konfiguriert ist, einen Alarm zu aktivieren, wenn das bestimmte Dispersionsmaß über dem Schwellenwert liegt, und den Alarm auf einer Anzeige der Fluiddurchflussüberwachungseinheit darzustellen.

7. Fluidversorgungsleitung nach einem der vorhergehenden Ansprüche, wobei die Fluiddurchflussüberwachungseinheit eine Wassermessvorrichtung ist, die dazu konfiguriert ist, die Durchflussrate des Fluids, das zwischen dem Einlass und dem Auslass des Durchflussrohres hindurchläuft, dauerhaft zu bestimmen.

8. Fluidversorgungsleitung nach einem der vorhergehenden Ansprüche, wobei ein Phasenunterschied (Δφ) zwischen zwei Oszillationen, die ein sich mit und ein sich entgegengesetzt ausbreitendes Wellenpaket darstellen, als ein Maß für den Durchgangszeitunterschied verwendet wird und das Maß von statistischer Dispersion auf Grundlage des Phasenunterschieds berechnet wird.

9. Fluidversorgungsleitung nach einem der vorhergehenden Ansprüche, wobei die Steuerschaltung ferner dazu angepasst ist, den Gesamtdurchfluss eines Fluids, das durch das Durchflussrohr läuft, zu berechnen und den Gesamtdurchfluss in einem Speicher der Fluiddurchflussüberwachungseinheit zu speichern.

10. Verfahren zum Erkennen von leckenden Rückschlagventilen in einem Versorgungsnetz mittels einer Fluiddurchflussüberwachungseinheit auf Grundlage von Ultraschall-Laufzeitmessungen, wobei das Verfahren die folgenden Schritte umfasst:
- dauerhaftes Senden und Empfangen von sich mit und sich entgegengesetzt ausbreitenden Ultraschallwellenpaketen (20, 21) durch ein Fluid mittels der Fluiddurchflussüberwachungseinheit;
- dauerhaftes Bestimmen eines Durchgangszeitunterschieds zwischen den sich mit und sich entgegengesetzt ausbreitenden Ultraschallwellenpaketen mittels der Fluiddurchflussüberwachungseinheit;
**dadurch gekennzeichnet, dass** das Verfahren die Schritte des dauerhaften Berechnens, mittels der Fluiddurchflussüberwachung, eines Maßes (64) von statistischer Dispersion einer Vielzahl von dauerhaft gemessenen Laufzeitunterschieden; und des Erkennens, ob das Rückschlagventil (7) leckt, indem bestimmt wird, ob das Maß (64) von statistischer Dispersion während eines Zeitraums (63), in dem Nichtdurchflussbedingungen vorliegen, über einem Dispersionsschwellenwert liegt, wobei eine Nichtdurchflussbedingung dann vorliegt, wenn die Fluiddurchflussüberwachungseinheit den Durchfluss als null bestimmt, wenn kein Fluid an einem Verbrauchspunkt der Versorgungsleitung verbraucht wird, umfasst.

11. Verfahren nach Anspruch 10, wobei das Maß von statistischer Dispersion, das durch eine Fluiddurchflussüberwachungseinheit berechnet wird, zusätzlich mit dem Maß von statistischer Dispersion, die durch ein oder mehrere andere Fluiddurchflussüberwachungseinheiten berechnet wird, verglichen wird, um zu bestimmen, ob das Rückschlagventil leckt.

12. Verfahren nach Anspruch 10, wobei die Bestimmung davon, ob das Maß von statistischer Dispersion während eins Zeitraums, in dem Nichtdurchflussbedingungen vorliegen, über einem Dispersionsschwellenwert liegen, mittels der Fluiddurchflussüberwachungseinheit durchgeführt wird.

## Revendications

1. Conduite d'alimentation en fluide comprenant une unité de surveillance d'écoulement de fluide et un clapet anti-retour, l'unité de surveillance d'écoulement de fluide étant adaptée pour surveiller un fluide s'écoulant à travers le clapet anti-retour, l'unité de surveillance d'écoulement de fluide comprenant :
- un tube d'écoulement (3) avec une ouverture traversante (31) pour le passage d'un fluide entre une entrée (32) et une sortie (33) ;
- deux, ou plus, transducteurs à ultrasons (4) agencés au niveau du tube d'écoulement en vue de l'émission et de la réception des paquets d'ondes ultrasonores (21, 22) à co-propagation et à contre-propagation à travers le fluide ; et
- un circuit de commande (5) configuré pour faire fonctionner les transducteurs à ultrasons et calculer les différences de temps de transit entre les paquets d'ondes à co-propagation et à contre-propagation ;
**caractérisé en ce que** le circuit de commande (5) est en outre configuré pour calculer une mesure (64) de dispersion statistique d'une pluralité de différences de temps de transit mesurées en permanence ; et détecter si le clapet anti-retour (7), agencé dans le tube d'écoulement ou dans le prolongement de celui-ci, fuit en déterminant si la mesure (64) de dispersion statistique est supérieure à un seuil de dispersion durant une période (63) soumise à des conditions d'absence d'écoulement, une condition d'absence d'écoulement est considérée comme existante lorsque l'unité de surveillance d'écoulement de fluide détermine que l'écoulement est nul lorsqu'aucun fluide n'est consommé à un point de consommation de la conduite d'alimentation.

2. Conduite d'alimentation en fluide selon la revendication 1, ladite mesure de la dispersion statistique étant la variance (σ²) ou l'écart type (σ) de la pluralité de différences de temps de transit mesurées en continu.

3. Conduite d'alimentation en fluide selon l'une quelconque des revendications précédentes, ledit seuil de dispersion étant de 1 (un) écart type calculé sur la base d'une population de différences de temps de transit historiques mesurées durant une période précédente soumise à des conditions d'absence écoulement.

4. Conduite d'alimentation en fluide selon l'une quelconque des revendications précédentes, ledit clapet anti-retour (7) étant agencé dans le prolongement du tube d'écoulement ou monté dans l'ouverture traversante du tube d'écoulement pour commander l'écoulement d'eau à travers le tube d'écoulement.

5. Conduite d'alimentation en fluide selon l'une quelconque des revendications précédentes, comprenant en outre un émetteur radiofréquence adapté pour émettre sans fil des paquets radio, et ledit circuit de commande étant adapté pour inclure une valeur liée à la mesure de dispersion statistique dans un paquet radio et émettre le paquet radio par l'intermédiaire de l'émetteur radiofréquence vers un récepteur distant.

6. Conduite d'alimentation en fluide selon l'une quelconque des revendications précédentes, ledit circuit de commande étant configuré pour activer une alarme si la mesure de dispersion déterminée est supérieure à la valeur seuil, et pour présenter une indication de l'alarme dans un dispositif d'affichage de l'unité de surveillance d'écoulement de fluide.

7. Conduite d'alimentation en fluide selon l'une quelconque des revendications précédentes, ladite unité de surveillance de l'écoulement de fluide étant un compteur d'eau configuré pour déterminer en permanence le débit du fluide passant entre l'entrée et la sortie du tube d'écoulement.

8. Conduite d'alimentation en fluide selon l'une quelconque des revendications précédentes, une différence de phase (Δφ) entre deux oscillations représentatives d'un paquet d'ondes à co-propagation et à contre propagation étant utilisée en tant que mesure de la différence de temps de transit et ladite mesure de dispersion statistique étant calculée sur la base de la différence de phase.

9. Conduite d'alimentation en fluide selon l'une quelconque des revendications précédentes, ledit circuit de commande étant en outre adapté pour calculer l'écoulement agrégé d'un fluide traversant le tube d'écoulement et pour stocker l'écoulement agrégé dans une mémoire de l'unité de surveillance de l'écoulement de fluide.

10. Procédé permettant la détection de clapets anti-retour fuyant dans un réseau de distribution d'utilités par une unité de surveillance d'écoulement de fluide sur la base de mesures de temps de vol par ultrasons, le procédé comprenant les étapes de :
- émission et réception en permanence des paquets d'ondes ultrasonores (20, 21) à co-propagation et contre-propagation à travers un fluide par l'unité de surveillance d'écoulement de fluide ;
- détermination en permanence une différence de temps de transit entre les paquets d'ondes ultrasonores à co-propagation et à contre-propagation par l'unité de surveillance d'écoulement de fluide ;
**caractérisé en ce que** le procédé comprend les étapes de calcul en permanence par l'unité de surveillance de l'écoulement de fluide d'une mesure (64) de dispersion statistique d'une pluralité de différences de temps de transit mesurées en permanence ; et détection pour savoir si le clapet anti-retour (7) fuit en déterminant si la mesure (64) de dispersion statistique est supérieure à un seuil de dispersion durant une période (63) soumise à des conditions d'absence écoulement, une condition d'absence écoulement est considérée comme existante lorsque l'unité de surveillance d'écoulement de fluide détermine que l'écoulement est nul lorsqu'aucun fluide n'est consommé au niveau d'un point de consommation de la ligne d'alimentation.

11. Procédé selon la revendication 10, ladite mesure de dispersion statistique calculée par une unité de surveillance d'écoulement de fluide étant en plus comparée aux mesures de dispersion statistique calculées par une ou plusieurs autres par des unités de surveillance d'écoulement de fluide, pour déterminer si le clapet anti-retour fuit.

12. Procédé selon la revendication 10, ladite détermination pour savoir si la mesure de la dispersion statistique est au-dessus d'un seuil de dispersion durant une période soumise à des conditions d'absence d'écoulement étant effectuée par l'unité de surveillance d'écoulement de fluide.
